# EUROPÄISCHE PATENTSCHRIFT

(11) **EP 1 370 760 B1**
(45) Veröffentlichungstag und Bekanntmachung des Hinweises auf die Patenterteilung: **10.10.2007**
(21) Anmeldenummer: 02727248.3
(22) Anmeldetag: 19.03.2002
(51) Int. Cl.: F02M 25/028, F02M 31/04, F02B 29/04

(54) **VORRICHTUNG ZUR BEFEUCHTUNG DER EINLASSLUFT EINER EINEN TURBOLADER AUFWEISENDEN BRENNKRAFTMASCHINE MIT VORERWÄRMUNG DURCH EINEN WASSERKREISLAUF**
DEVICE FOR HUMIDIFYING THE INTAKE AIR OF AN INTERNAL COMBUSTION ENGINE, WHICH IS EQUIPPED WITH A TURBOCHARGER, INVOLVING PRE-HEATING EFFECTED BY A WATER CIRCUIT
DISPOSITIF D'HUMIDIFICATION DE L'AIR D'ENTREE D'UN MOTEUR A COMBUSTION INTERNE COMPORTANT UN TURBOCOMPRESSEUR PAR PRECHAUFFAGE AU MOYEN D'UN CIRCUIT D'EAU

(30) Priorität: 20.03.2001 DE 10113416
(43) Veröffentlichungstag der Anmeldung: 17.12.2003
(73) Patentinhaber: Munters Euroform GmbH, 52072 Aachen (DE)
(72) Erfinder: WETTERGARD, Jan, S-196 31 Kungsängen (SE); BULANG, Siegfried, NL-6466 GL Kerkrade (NL)
(74) Vertreter: Hauck Patent- und Rechtsanwälte
(86) Internationale Anmeldenummer: PCT/DE2002/000986
(87) Internationale Veröffentlichungsnummer: WO 2002/075141

(56) Entgegenhaltungen:
- EP-A- 0 750 106
- EP-A- 0 916 836
- EP-A- 1 076 169
- DE-A- 3 439 444
- US-A- 4 122 679

## Beschreibung

Die vorliegende Erfindung betrifft eine Vorrichtung zur Befeuchtung der Einlassluft einer einen Turbolader aufweisenden Brennkraftmaschine.

Es ist bekannt, die Einlassluft von mit Turboladern versehenen Dieselbrennkraftmaschinen zu befeuchten, um auf diese Weise den NOx-Anteil im Abgas zu reduzieren. Ein derartiges Verfahren mit zugehöriger Vorrichtung ist in der WO 95/23 286 beschrieben. Hierbei findet eine Befeuchtungseinrichtung Verwendung, die von der Einlassluft und Wasser durchströmt wird, wobei die Einlassluft vor der Befeuchtung durch den Kompressor des Turboladers komprimiert wird und die im Kühlwasser oder den Abgasen der Brennkraftmaschine steckende Energie zum Vorerhitzen des Wassers verwendet wird, bevor dieses in die Befeuchtungseinrichtung eingeführt wird. Hierbei findet somit eine Befeuchtung komprimierter Luft Anwendung.

Aus der EP 1 076 169 A2 ist eine Vorrichtung zur Befeuchtung der Einlassluft von Brennkraftmaschinen, die einen Turbolader aufweisen, bekannt, die eine Befeuchtungseinrichtung, durch die die Einlassluft und Befeuchtungsflüssigkeit strömen und miteinander in Kontakt treten und die in Strömungsrichtung der Einlassluft stromauf des Kompressors des Turboladers angeordnet ist, und einen im Strömungsweg der Einlassluft stromauf der Befeuchtungseinrichtung angeordneten, zum Vorerhitzen der Einlassluft dienenden Luft/ Luft- Wärmetauscher, der von der atmosphärischen Einlassluft und der befeuchteten und komprimierten Einlassluft vom Kompressor durchströmt wird, aufweist. Bei dieser Lösung wird somit die Einlassluft im nicht komprimierten Zustand befeuchtet. Die Vorerwärmung der Einlassluft wird mit Hilfe eines Luft/Luft- Wärmetauschers realisiert, der von der komprimierten Einlassluft passiert wird.

Der Erfindung liegt die Aufgabe zugrunde, eine Vorrichtung der angegebenen Art zu schaffen, mit der die Einlassluft auf besonders effektive und praktische Weise zum Befeuchten vorerwärmt werden kann, wobei jedoch eine Kondensation in der komprimierten Luft vermieden werden soll.

Diese Aufgabe wird erfindungsgemäß bei einer Vorrichtung der angegebenen Art gelöst, durch die Merkmale gemäß Anspruch 1.

Es findet somit kein Luft/ Luft - Wärmetauscher wie beim vorstehend aufgezeigten Stand der Technik Verwendung, sondern es wird ein Luft/ Flüssigkeits - Wärmetauscher eingesetzt, der in einen Flüssigkeitskreis (Wasserkreis) geschaltet ist, welcher einen weiteren Wärmetauscher aufweist. Bei diesem weiteren Wärmetauscher handelt es sich ebenfalls um einen Luft/ Flüssigkeits - Wärmetauscher, der von der vom Kompressor kommenden komprimierten und befeuchteten Einlassluft durchströmt wird. In diesem weiteren Wärmetauscher wird die komprimierte und befeuchtete Einlassluft für die Brennkraftmaschine gekühlt, d.h. sie gibt einen Teil ihrer Wärmeenergie auf den Flüssigkeitskreis ab, mit dem diese Wärmeenergie in dem zum Vorerhitzen der Einlassluft dienenden Wärmetauscher auf die Einlassluft übertragen wird, die auf diese Weise für die nachfolgende Befeuchtung vorewärmt wird.

Bei dem Flüssigkeitskreis handelt es sich bevorzugt um einen Wasserkreis.

Die Lösung hat eine Reihe von Vorteilen. Zum einen kann für die Durchführung der Vorerwärmung der Einlassluft zum Befeuchten in vielen Fällen auf vorhandene Einrichtungen zurückgegriffen werden, insbesondere bei Brennkraftmaschinen, die bereits einen Ladeluftkühler besitzen. Hier kann der bereits vorhandene Ladeluftkühler umgestaltet werden, um erfindungsgemäß als weiterer Wärmetauscher im Flüsigkeitskreis zu dienen. Selbst wenn ein derartiger Ladeluftkühler nicht verwendet wird, so kann doch an dessen Stelle der zusätzliche Wärmetauscher angeordnet werden, so dass der für die erfindungsgemäße Lösung benötigte Raumbedarf reduziert wird. Zum anderen können weitere Einrichtungen, beispielsweise Abgaswärmetauscher, Ölwärmetauscher (Ölkühler), in den Flüssigkeitskreis geschaltet werden, falls dies die Betriebsbedingungen der Brennkraftmaschine als wünschenswert erscheinen lassen.

Vorzugsweise ist daher der weitere Wärmetauscher im Flüssigkeitskreis ein Ladeluftkühler (Intercooler), insbesondere ein bereits vorhandener Ladeluftkühler, der entsprechend umgestaltet wird. So wird vorzugsweise der vorhandene Ladeluftkühler einer Schiffsbrennkraftmaschine als weiterer Wärmetauscher verwendet, wobei der Seewasserkreis des Ladeluftkühlers als Flüssigkeitskreis genutzt wird, in den der Wärmetauscher geschaltet ist (mit entsprechend verändertem Seewasserkreis).

Es wird die vom Kompressor kommende komprimierte und befeuchtete Einlassluft im weiteren Wärmetauscher (Ladeluftkühler) gekühlt. Eine derartige Kühlung ist erwünscht, wobei jedoch eine Kondensation der komprimierten und befeuchteten Luft vermieden werden muss. Dies wird so erreicht, dass der Flüssigkeitskreis ein Bypassventil und eine Bypassleitung aufweist, die eine Rückführung der vom Wärmetauscher kommenden Flüssigkeit zu demselben ohne Passieren des weiteren Wärmetauschers ermöglichen. Stellt ein Sensor fest, dass eine weitere Abkühlung der komprimierten und befeuchteten Einlassluft zu einer Kondensation führen würde, wird das Bypassventil geöffnet und die vom Wärmetauscher kommende Flüssigkeit zum Wärmetauscher teilweise zurückgeführt, ohne den weiteren Wärmetauscher zu passieren. Der Flüssigkeitskreis wird daher teilweise kurzgeschlossen, was zur Folge hat, dass die befeuchtete und komprimierte Einlassluft im weiteren Wärmetauscher (Ladeluftkühler) weniger abgekühlt wird. Durch Schließen des Bypassventils kann der Flüssigkeitskreis wieder im Nomalbetrieb betrieben werden. Mit dem Bypassventil kann somit die Kühlung der befeuchteten und komprimierten Einlaßluft reguliert werden.

Die erfindungsgemäße Lösung zeichnet sich durch einen besonders einfachen Aufbau aus, da es relativ unkompliziert ist, zwei verschiedene, jedoch im Prinzip gleiche Wärmetauscher im Abstand voneinander zu installieren und über einen Flüssigkeitskreis (Wasserkreis) miteinander zu verbinden. Hierzu ist lediglich ein Flüssigkeitsrohrsystem mit einer Pumpe erforderlich.

Vorzugsweise ist dem weiteren Wärmetauscher ein Tropfenabscheider nachgeschaltet.

Die übrigen Bestandteile der Vorrichtung zur Befeuchtung der Einlassluft der Brennkraftmaschine können im wesentlichen so ausgebildet sein, wie in der eingangs genannten EP 1 076 169 A2 beschrieben. So können insbesondere vor dem erwähnten, in den Füssigkeitskreis geschalteten Wärmetauscher weitere Befeuchtungsstufen mit vorgeschalteten Lufterwärmungseinrichtungen vorgesehen sein. Bei den Lufterwärmungseinrichtungen kann es sich hierbei um Wärmetauscher handeln, die beispielsweise vom Kühlwasser der Brennkraftmaschine durchströmt werden. Auf Einzelheiten dieser weiteren Bestandteile wird hier nicht mehr Bezug genommen. Vielmehr wird diesbezüglich auf die Offenbahrung der EP 1 076 169 A2 Bezug genommen.

Die Erfindung wird nachfolgend anhand von zwei Ausführungsbeispielen in Verbindung mit der Zeichnung im einzelnen erläutert. Es zeigen:
- Figur 1:: eine Schemadarstellung einer ersten Ausführungsform einer Befeuchtungsvorrichtung mit Dieselbrennkraftmaschine; und
- Figur 2:: eine Schemadarstellung einer weiteren Ausführungsform einer Befeuchtungsvorrichtung mit Dieselbrennkraftmaschine .

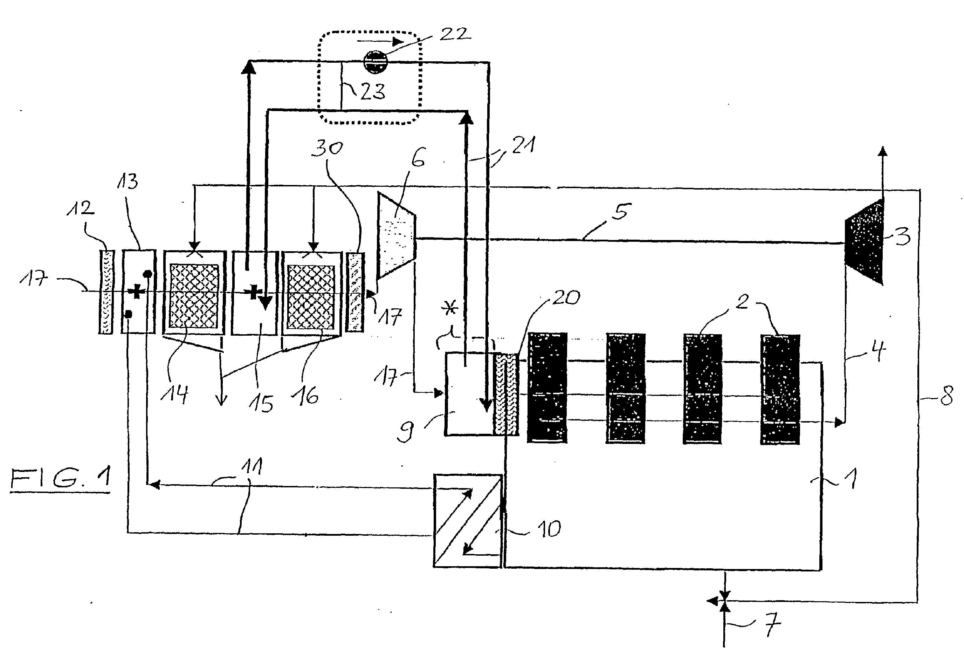

Bei der in Figur 1 dargestellten Dieselbrennkraftmaschine 1 handelt es sich um einen Schiffsmotor, der vier Zylinder 2 aufweist. Das Abgas der Brennkraftmaschine 1 wird bei 4 abgeleitet und treibt eine Turbine 3 an, die Teil eines Turboladers bildet. Der Turbolader umfasst ferner einen Kompressor 6, der über eine Welle 5 von der Turbine 3 angetrieben wird. Der Kompressor 6 dient zum Verdichten der Einlassluft der Dieselbrennkraftmaschine, die über einen bei 17 dargestellten Strömungsweg den jeweiligen Zylindern 2 zugeführt wird.

Atmosphärische Einlassluft gelangt entlang dem Strömungsweg 17 über einen Luftfilter 12 zum Kompressor 6. Im Strömungsweg der Einlassluft befinden sich in dieser Reihenfolge vom Luftfilter 12 zum Kompressor 6 ein Luft/ Wasser- Wärmetauscher 13, eine zweite Befeuchtungseinrichtung 14, ein Luft/ Wasser - Wärmetauscher 15, eine erste Befeuchtungseinrichtung 16 und ein Tropfenabscheider 30. Die Einlassluft passiert den Luft/ Wasser - Wärmetauscher 13 und wird dabei vorerhitzt. In der nachfolgenden Befeuchtungseinrichtung 14 wird die vorerhitzte Luft befeuchtet, wodurch sie abgekühlt wird. Im folgenden Luft/ Wasser - Wärmetauscher 15 erfolgt eine erneute Erhitzung und in der nachfolgenden Befeuchtungseinrichtung 16 eine zusätzliche Befeuchtung, bevor die Einlassluft nach dem Passieren des Tropfenabscheiders 30 in den Kompressor 6 eintritt.

Die vom Kompressor 6 abgegebene komprimierte, befeuchtete Luft gelangt über den Strömungsweg 17 in einen weiteren Luft/ Wasser - Wärmetauscher 9, der als modifizierter Ladeluftkühler ausgebildet ist. Sie durchdringt den Wärmetauscher 9 und wird hierbei abgekühlt, ohne zu kondensieren. Nach dem Passieren eines weiteren Tropfenabscheiders 20 wird sie den Zylindern 2 der Dieselbrennkraftmaschine 1 zugeführt.

Der hier gezeigte Schiffsmotor besitzt einen Meerwasserkreis (Salzwasserkreis) 7, der zum Kühlen des Motors dient. Von diesem Kreis 7 wird über eine Zweigleitung 8 Salzwasser abgezweigt, das den beiden Befeuchtungseinrichtungen 14 und 16 zugeführt wird. Die Befeuchtungseinrichtungen sind als Rieselbefeuchter ausgebildet, die von oben nach unten vom Salzwasser-durchströmt werden, wobei das Salzwasser über geeignete Rieselbefeuchtungseinrichtungen auf ein Füllkörperbett gesprüht wird. Der Rieselbefeuchter wird in Querrichtung von der Einlassluft durchströmt, wobei diese entsprechende Feuchtigkeit auf adiabatische Weise aufnimmt.

In den Strömungsweg 17 der Einlassluft kann stromab der Befeuchtungseinrichtungen eine Vorrichtung zum Abtrennen von mitgeführten Salzpartikeln eingeschaltet sein, um ein Mitfuhren von Salzpartikeln in die Zylinder der Brennkraftmaschine zu verhindern.

In den Kühlwasserkreis der Dieselbrennkraftmaschine ist ein Wasser/ Wasser - Wärmetauscher 10 eingeschaltet, der zur Übertragung der im Kühlwasser steckenden Wärmeenergie auf einen Wasserkreislauf 11 dient. Dieser Wasserkreislauf 11 enthält den vorstehend erwähnten Luft/ Wasser - Wärmetauscher 13 zum Vorerhitzen der Einlassluft. Das durch den Kreis 11 strömende erwärmte Wasser fließt durch die Rohrschlangen des Wärmetauschers 13 und erwärmt dabei die die Rohrschlangen umströmende Einlassluft.

Zum Vorerhitzen der Einlassluft kann auch das Abgas der Dieselkraftmaschine dienen. Der Wämetauscher 13 kann daher auch ein Luft/ Luft - Wärmetauscher sein.

Der Wärmetauscher 13 und die nachgeschaltete Befeuchtungseinrichtung 14 sind fakultativ. Wesentliche Bestandteile der Vorrichtung sind der Wärmetauscher 15 und die Befeuchtungseinrichtung 16. Bei dem Wärmetauscher 15 handelt es sich um einen Luft/Wasser - Wärmetauscher, der eine von Wasser durchströmte Rohrschlange aufweist. Dieses Wasser wird über eine Pumpe 22 in einem Wasserkreis 21 umgewälzt, in den der bereits envähnte Wärmetauscher 9 (modifizierter Ladeluftkühler) geschaltet ist. Auch dieser Wärmetauscher 9 besitzt eine vom Wasser des Wasserkreises 21 durchströmte Rohrschlange. Diese wird von der komprimierten und befeuchteten Einlassluft umströmt.

Eine mit einem Bypassventil (nicht gezeigt) versehene Bypassleitung 23 verbindet Zuleitung und Ableitung. Wird das Bypassventil geöffnet, strömt das vom Wärmetauscher 15 kommende Wasser durch die Bypassleitung 23 zur Rückleitung des Wasserkreises und von dort in den Wärmetauscher 15 zurück. Es passiert daher nicht den Wärmetauscher 9. Auf diese Weise wird vermieden, dass die den Wärmetauscher 9 passierende Luft weiter abgekühlt wird (Kondensationsvermeidung). Durch Schließen des Bypassventils kann der Wasserkreis wieder seinen normalen Betrieb aufnehmen.

Bei der hier dargestellten Ausführungsform handelt es sich bei dem Wärmetauscher 9 um einen modifizierten Ladeluftkühler mit nachgeschaltetem Tropfenabscheider 20. Die ursprüngliche Seewasserkühlung dieses Ladeluftkühlers ist geschlossen, und der eingebaute Wasserkreis wird hier als Teil des Wasserkreises 21, eventuell mit einer anderen internen Schaltung, verwendet. Auf diese Weise kann auf eine bestehende Einrichtung zurückgegriffen werden, die mit geringem Aufwand für die Zwecke der Erfindung genutzt werden kann.

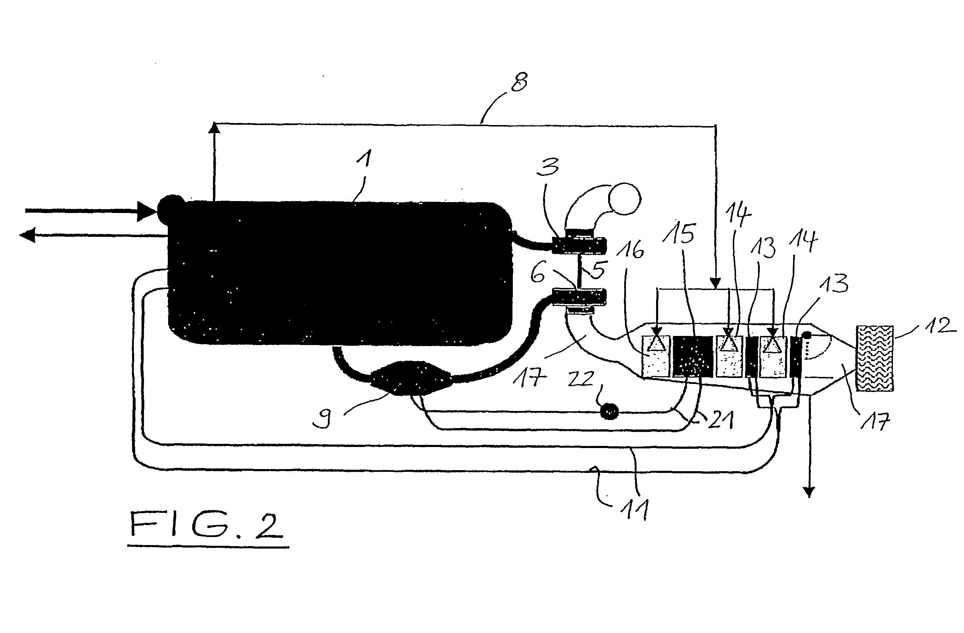

Figur 2 zeigt eine weitere Ausführungsform einer Befeuchtungsvorrichtung mit Dieselbrennkraftmaschine, die sich von der Ausführungsform der Figur 1 im wesentlichen nur dadurch unterscheidet, dass der Befeuchtungsvorrichtung 15 zwei Stufen vorgeschaltet sind, die jeweils eine Befeuchtungseinrichtung 14 und einen vorgeschalteten Wärmetauscher 13 enthalten. Gleiche Bezugszeichen bezeichnen hierbei gleiche Teile wie Figur 1. Einlassluft für die Dieselbrennkraftmaschine 1 strömt auf einem Strömungsweg 17 durch einen Luftfilter 12 und passiert einen Luft/ Wasser-Wärmetauscher 13 und eine nachgeschaltete Befeuchtungsvorrichtung 14. Sie gelangt dann durch einen weiteren Luft/ Wasser - Wärmetauscher 13 und eine weitere Befeuchtungseinrichtung 14 zum Luft/ Wasser - Wärmetauscher 15, der in den Wasserkreis 21 geschaltet ist, welcher einen weiteren Wärmetauscher 9 aufweist bei dem es sich um einen modifizierten Ladeluftkühler (Intercooler) handelt wie bei der Ausführungsform der Figur 1. Nach dem Passieren des Wärmetauschers 15 gelangt die Einlassluft zur Befeuchtungseinrichtung 16. Sie ist dann vorgewärmt und befeuchtet und wird im Kompressor 6 komprimiert, von dem sie dem weiteren Wärmetauscher 9 zugeführt wird, in dem sie abgekühlt wird. Sie gelangt dann im abgekühlten Zustand zur Brennkraftmaschine 1.

Im Wasserkreis 21 wird Wasser mit Hilfe einer nicht gezeigten Pumpe umgewälzt. Dieses Wasser nimmt im Wärmetauscher 9 Wärme von der der Brennkraftmaschine zugeführten Luft auf und gibt diese im Wärmetauscher 15 an die vorzuerwärmende Einlassluft ab.

Erwähnt sei noch, dass der Wärmetauscher 15 und die Befeuchtungseinrichtung 16 generell auch in mehrere Einzelstufen aufgeteilt sein können. Dies trifft auch auf die optional vorgesehenen Wärmetauscher und Befeuchtungseinrichtungen zu.

## Patentansprüche

1. Vorrichtung zur Befeuchtung der Einlassluft von Brennkraftmaschinen, die einen Turbolader aufweisen, mit einer Befeuchtungseinrichtung (16), durch die die Einlassluft und die Befeuchtungsflüssigkeit strömen und miteinander in Kontakt treten und die in Strömungsrichtung der Einlassluft stromauf des Kompressors (6) des Turboladers angeordnet ist, und einem in Strömungsrichtung der Einlassluft stromauf der Befeuchtungseinrichtung (16) angeordneten, zum Vorerhitzen der Einlassluft dienenden Wärmetauscher (15), der von der atmosphärischen Einlassluft durchströmt wird, **dadurch gekennzeichnet, dass** der zum Vorerhitzen der Einlassluft dienende Wärmetauscher (15) in einen Flüssigkeitskreis (21) geschaltet ist, mit dem die der Brennkraftmaschine (1) zugeführte befeuchtete und vom Kompressor (6) komprimierte Einlassluft über einen weiteren Wärmetauscher (9) gekühlt wird, und dass die Vorrichtung zur Regulierung der Kühlung der befeuchteten und komprimierten Einlassluft einen Sensor aufweist, der feststellt, ob eine weitere Abkühlung der komprimierten und befeuchteten Einlassluft durch den weiteren Wärmetauscher (15) zu einer Kondensation führt, und eine von den Sensorsignalen angesteuerte Einrichtung zum zumindest teilweisen Kurzschließen des Flüssigkeitskreises (21) besitzt.

2. Vorrichtung nach Anspruch 1, **dadurch gekennzeichnet, dass** der weitere Wärmetauscher (9) ein Ladeluftkühler ist.

3. Vorrichtung nach Anspruch 1 oder 2, **dadurch gekennzeichnet, dass** dem weiteren Wärmetauscher (9) ein Tropfenabscheider (20) nachgeschaltet ist.

4. Vorrichtung nach einem der vorangehenden Ansprüche, **dadurch gekennzeichnet, dass** der Wärmetauscher (9) ein vorhandener Ladeluftkühler einer Schiffsbrennkraftmaschine ist, dessen Seewasserkreis als Wasserkreis (21) genutzt wird, in den der Wärmetauscher (15) geschaltet ist.

5. Vorrichtung nach einem der vorangehenden Ansprüche, **dadurch gekennzeichnet, dass** der Flüssigkeitskreis (21) als Einrichtung zum Kurzschließen ein Bypassventil und eine Bypassleitung (23) aufweist, die eine Rückführung der vom Wärmetauscher (15) kommenden Flüssigkeit zu demselben ohne Passieren des weiteren Wärmetauschers (9) ermöglichen.

6. Vorrichtung nach einem der vorangehenden Ansprüche, **dadurch gekennzeichnet, dass** in Strömungsrichtung der Einlassluft stromauf des Wärmetauschers (15) eine weitere Befeuchtungseinrichtung (14) angeordnet ist, der eine Erwärmungsvorrichtung für die Einlassluft vorgeschaltet ist.

7. Vorrichtung nach einem der vorangehenden Ansprüche, **dadurch gekennzeichnet, dass** in Strömungsrichtung der Einlassluft stromab der Befeuchtungseinrichtung (16) und stromauf des Kompressors (6) eine weitere Befeuchtungseinrichtung angeordnet ist, der eine Erwärmungsvorrichtung für die Einlassluft vorgeschaltet ist.

8. Vorrichtung nach Anspruch 6 oder 7, **dadurch gekennzeichnet, dass** die Erwärmungsvorrichtung ein Luft/ Wasser- Wärmetauscher (13) zur Abgabe der Wärmeenergie des Kühlwasser der Brennkraftmaschine (1) ist.

9. Vorrichtung nach einem der vorangehenden Ansprüche, **dadurch gekennzeichnet, dass** in den Strömungsweg der komprimierten und befeuchteten Einlassluft zwischen den Wärmetauscher (15) und die Brennkraftmaschine (1) eine dritte Befeuchtungseinrichtung geschaltet ist.

10. Vorrichtung nach Anspruch 9, **dadurch gekennzeichnet, dass** der dritten Befeuchtungseinrichtung ein Wärmetauscher zur Erwärmung des Befeuchtungsmediums zugeordnet ist.

11. Vorrichtung nach einem der vorangehenden Ansprüche, **dadurch gekennzeichnet, dass** ein Luftfilter stromab der Befeuchtungseinrichtung im Strömungsweg der Einlassluft angeordnet ist.

12. Vorrichtung nach einem der vorangehenden Ansprüche, **dadurch gekennzeichnet dass** die Brennkraftmaschine (1) einen Wärmetauscher (10) zum Kühlen des Kühlwassers aufweist.

13. Vorrichtung nach Anspruch 12, **dadurch gekennzeichnet, dass** der Wärmetauscher Teil eines Meerwasserkreises (Salzwasserkreises) ist.

14. Vorrichtung nach einem der vorangehenden Ansprüche, **dadurch gekennzeichnet, dass** der weitere Wärmetauscher (9) in Abhängigkeit vom Turboladerdruck gesteuert wird.

15. Vorrichtung nach einem der vorangehenden Ansprüche, **dadurch gekennzeichnet, dass** sie einen Partikelabscheider aufweist.

## Claims

1. A device for humidifying the intake air of internal combustion engines equipped with a turbocharger, the device comprising humidifying means (16) through which the intake air and the humidifying liquid flow and contact with one another and which, in flow direction of the intake air, is located upstream of the compressor (6) of the turbocharger, and a heat exchanger (15) located, in flow direction of the intake air, upstream of the humidifying means (16) and serving for preheating the intake air, the heat exchanger being flown through by the atmospheric intake air, **characterized in that** the heat exchanger (15) serving for preheating the intake air is located in a liquid circuit (21) with which the humidified intake air supplied to the internal combustion engine (1) and compressed by the compressor (6) is cooled by means of an additional heat exchanger (9), and that the device includes a sensor for regulating the cooling of the humidified and compressed intake air, wherein the sensor detects whether a further cooling of the compressed and humidified intake air by the additional heat exchanger (15) results in a condensation, and means controlled by the sensor signals for the at least partial short-circuiting of the liquid circuit (21).

2. The device according to claim 1, **characterized in that** the additional heat exchanger (9) is a cooler for the charged air.

3. The device according to claim 1 or 2, **characterized in that** a droplet separator (20) is located behind the additional heat exchanger (9).

4. The device according to one of the preceding claims, **characterized in that** the heat exchanger (9) is an existing cooler for the charged air of an internal combustion engine of a ship the sea water circuit of which is used as water circuit (21) in which the heat exchanger (15) is located.

5. The device according to one of the preceding claims, **characterized in that** the liquid circuit (21) includes as means for short-circuiting a bypass valve and a bypass line (23) which enable a return of the liquid coming from the heat exchanger (15) to the same without passing the additional heat exchanger (9).

6. The device according to one of the preceding claims, **characterized in that** an additional humidifying means (14) is located upstream of the heat exchanger (15) in flow direction of the intake air, wherein a heating device for the intake air is located upstream of the additional humidifying means.

7. The device according to one of the preceding claims, **characterized in that**, in flow direction of the intake air downstream of the humidifying means (16) and upstream of the compressor (6), an additional humidifying means is located, wherein a heating device for the intake air is located upstream of the additional humidifying means.

8. The device according to claim 6 or 7, **characterized in that** the heating means is an air/water heat exchanger (13) for discharging the heat energy of the cooling water of the internal combustion engine (1).

9. The device according to one of the preceding claims, **characterized in that** a third humidifying means is located within the flow path of the compressed and humidified intake air between the heat exchanger (15) and the internal combustion engine (1).

10. The device according to claim 9, **characterized in that** a heat exchanger for heating the humidifying medium is associated with the third humidifying means.

11. The device according to one of the preceding claims, **characterized in that** an air filter is located downstream of the humidifying means in the flow path of the intake air.

12. The device according to one of the preceding claims, **characterized in that** the internal combustion engine (1) has a heat exchanger (10) for cooling the cooling water.

13. The device according to claim 12, **characterized in that** the heat exchanger is part of a sea water circuit (salt water circuit).

14. The device according to one of the preceding claims, **characterized in that** the additional heat exchanger (9) is controlled in response to the turbocharger pressure.

15. The device according to one of the preceding claims, **characterized in that** it includes a particle separator.

## Revendications

1. Dispositif d'humidification de l'air d'entrée de moteurs à combustion interne qui présentent un turbocompresseur, comprenant un système d'humidification (16) par lequel l'air d'entrée et le liquide d'humidification s'écoulent et entrent en contact l'un avec l'autre et qui est disposé en amont du compresseur (6) du turbocompresseur dans le sens d'écoulement de l'air d'entrée, et un échangeur de chaleur (15) servant à préchauffer l'air d'entrée, disposé en amont du système d'humidification (16) dans le sens d'écoulement de l'air d'entrée, dans lequel circule l'air d'entrée atmosphérique, **caractérisé en ce que** l'échangeur (15) servant à préchauffer l'air d'entrée est intercalé dans un circuit de liquide (21) avec lequel l'air d'entrée humidifié fourni au moteur à combustion interne (1) et comprimé par le compresseur (6) est refroidi par un autre échangeur de chaleur (9), et **en ce que** le dispositif de régulation du refroidissement de l'air d'entrée humidifié et comprimé présente un capteur qui détermine si un refroidissement supplémentaire de l'air d'entrée comprimé et humidifié par l'autre échangeur de chaleur (15) conduit à une condensation, et comprend un système contrôlé par les signaux du capteur pour court-circuiter au moins en partie le circuit de liquide (21).

2. Dispositif selon la revendication 1, **caractérisé en ce que** l'autre échangeur de chaleur (9) est un refroidisseur d'air de suralimentation.

3. Dispositif selon la revendication 1 ou 2, **caractérisé en ce qu'**un séparateur de gouttes (20) est monté en aval de l'autre échangeur de chaleur (9).

4. Dispositif selon l'une quelconque des revendications précédentes, **caractérisé en ce que** l'échangeur de chaleur (9) est un refroidisseur d'air de suralimentation d'un moteur à combustion interne de bateau dont le circuit d'eau de mer est utilisé comme circuit d'eau (21) dans lequel l'échangeur de chaleur (15) est intercalé.

5. Dispositif selon l'une quelconque des revendications précédentes, **caractérisé en ce que** le circuit de liquide (21) présente comme système de court-circuitage une soupape de dérivation et une conduite de dérivation (23) qui permettent un renvoi du liquide venant de l'échangeur de chaleur (15) vers celui-ci sans passer par l'autre échangeur de chaleur (9).

6. Dispositif selon l'une quelconque des revendications précédentes, **caractérisé en ce qu'**un autre système d'humidification (14) en amont duquel est monté un dispositif de chauffage pour l'air d'entrée est disposé en amont de l'échangeur de chaleur (15) dans le sens d'écoulement de l'air d'entrée.

7. Dispositif selon l'une quelconque des revendications précédentes, **caractérisé en ce qu'**un autre système d'humidification en amont duquel est monté un dispositif de chauffage pour l'air d'entrée est disposé est disposé en aval du système d'humidification (16) et en amont du compresseur (6) dans le sens d'écoulement de l'air d'entrée.

8. Dispositif selon la revendication 6 ou 7, **caractérisé en ce que** le dispositif de chauffage est un échangeur de chaleur air / eau (13) pour décharger l'énergie thermique de l'eau de refroidissement du moteur à combustion interne (1).

9. Dispositif selon l'une quelconque des revendications précédentes, **caractérisé en ce qu'**un troisième système d'humidification est intercalé dans la voie d'écoulement de l'air d'entrée comprimé et humidifié entre l'échangeur de chaleur (15) et le moteur à combustion interne (1).

10. Dispositif selon la revendication 9, **caractérisé en ce qu'**un échangeur de chaleur pour chauffer l'agent humidifiant est associé au troisième système d'humidification.

11. Dispositif selon l'une quelconque des revendications précédentes, **caractérisé en ce qu'**un filtre à air est disposé en aval du système d'humidification dans la voie d'écoulement de l'air d'entrée.

12. Dispositif selon l'une quelconque des revendications précédentes, **caractérisé en ce que** le moteur à combustion interne (1) présente un échangeur de chaleur (10) pour refroidir l'eau de refroidissement.

13. Dispositif selon la revendication 12, **caractérisé en ce que** l'échangeur de chaleur fait partie d'un circuit d'eau de mer (circuit d'eau salée).

14. Dispositif selon l'une quelconque des revendications précédentes, **caractérisé en ce que** l'autre échangeur de chaleur (9) est commandé en fonction de la pression du turbocompresseur.

15. Dispositif selon l'une quelconque des revendications précédentes, **caractérisé en ce qu'**il présente un séparateur de particules.
